# EUROPEAN PATENT SPECIFICATION

(11) **EP 1 128 717 B1**
(45) Date of publication and mention of the grant of the patent: **13.09.2006**
(21) Application number: 99949205.1
(22) Date of filing: 20.10.1999
(51) Int. Cl.: A01B 69/08, B62D 13/02

(54) **TANDEM TOWABLE COMBINATION**
TANDEM ZIEHBARE KOMBINATION
ENSEMBLE DE REMORQUAGE EN TANDEM

(30) Priority: 11.11.1998 GB 9824624; 23.12.1998 GB 9828406
(43) Date of publication of application: 05.09.2001
(73) Proprietor: Kverneland Naerbo AS, 4350 Naerbo (NO)
(72) Inventor: SANDBERG, Lars Kverneland Naerbo as, N-4350 Naerbo (NO)
(74) Representative: Orr, William McLean
(86) International application number: PCT/GB1999/003375
(87) International publication number: WO 2000/027179

(56) References cited:
- EP-A- 0 309 938
- DE-A- 2 758 298
- DE-A- 3 304 166
- DE-A- 4 210 001
- US-A- 2 702 193

## Description

This invention relates to a tandem towable combination which is intended to be towed behind a tractor or other propelling vehicle (see eg. US-A-2 702 193).

The invention has been developed primarily in connection with a tandem combination of wheeled machines (comprising a foremost machine and a rearmost machine) for use in agriculture, with the foremost machine being intended to be coupled at its forward end with the rear of the propelling vehicle and the rearmost machine being coupled at its forward end to the foremost machine, to be towed behind the foremost machine.

The invention is particularly suitable for application to a tandem combination of a baler (which comprises the foremost machine) and a bale wrapper, which comprises the rearmost machine. The combination can therefore be towed behind a tractor in order to carry out two separate operations on a mown or cut crop lying on the ground e.g. grass, namely to pick-up the crop and form it into a bale in the baler, and then to transfer the bale to the bale wrapper which then applies stretch-film wrapping around the bale prior to discharging the wrapped bale.

The invention is applicable to balers of any suitable type, including balers for forming bales which are 1) of rectangular cross section and 2) of circular cross section i.e. so called "big bales" or "round bales". Balers for forming cylindrical bales of circular cross section can be of the fixed chamber type or variable chamber type, as will be well known to those of ordinary skill in the art.

Bale wrappers used in the combination can be of the rotating turntable type, or of the orbiting satellite type. Balers and bale wrappers are well known in agriculture, and need not be described in detail herein.

It is already known to provide a trailed combination of a baler and a bale wrapper (see for example WO90/14756), and in which each wheeled component of the combination has a chassis or frame supported by a respective wheel set, and with the bale wrapper being towed behind the baler via a tow bar or other pivoted connection. A tractor towing the combination therefore is able to manoeuvre the combination in a field, with the forward end of the baler pivoting relative to its connection with the tractor, and the forward end of the bale wrapper pivoting relative to its connection to the rear of the baler.

However, while the two pivot connections allow the combination to be manoeuvred in a field when necessary, this gives difficulty in designing a suitable transfer mechanism to transfer a formed bale from the baler to the bale wrapper. A satisfactory design of transfer mechanism would have to be able to transfer the bale to a usual bale-receiving table of the bale wrapper, despite variation in relative inclination of the longitudinal axes of the baler and the bale wrapper caused as the result of turning movements of the tractor and the trailed combination. Clearly, when the tractor and the towed combination carries out a turning manoeuvre, the axes of the tractor, the baler and the bale wrapper will no longer be generally parallel to each other (as will arise during normal forward travel without steering of the tractor), and therefore this will inhibit smooth transfer of any bale from the baler to the bale wrapper.

The invention seeks to overcome this problem by providing a tandem towable combination according to claim 1 with a control mechanism which seeks to maintain generally parallel relationship between the longitudinal axes, despite pivoting of the baler relative to the tractor (propelling vehicle) during steering movement of the tractor.

By provision of such a control mechanism, the axis of the bale wrapper can be located generally parallel to the axis of the baler at all times, and therefore this simplifies the transfer of the bale from the baler to the bale wrapper.

However, while the invention is particularly applicable to a towed combination of a baler and a bale wrapper, it should be understood that the principles of the invention may also be applied to other towed combinations in which it is desirable to maintain parallel (or co-axial) relationship between the longitudinal axes of the foremost and rearmost wheeled components of the combination. By way of example only, the foremost and rearmost wheeled components may comprise a bale wrapper and a following self-loading trailer.

The dependent claims concern particular embodiments of the invention.

Accordingly, by the invention, it is possible to maintain the axes of the foremost and rearmost devices generally parallel to each other, despite turning manoeuvres applied to the combination by the propelling vehicle. Effectively, the frames of the foremost and rearmost devices are maintained substantially rigid, and pivot as a single unit about the first forward towing hitch which couples the frame of the foremost device pivotally to the rear of the propelling vehicle.

In practice, there may be some small pivotal adjustment of the axis of the frame of the rearmost device, relative to the axis of the frame of the foremost device, as the compensating adjustment of the steering device takes place.

The foremost and rearmost devices therefore are maintained in substantially parallel alignment, despite turning movements applied to the combination by the propelling vehicle, and this facilitates easy transfer of material being handled by the foremost device to the rearmost device, or facilitates operations of any transfer mechanism effective between the foremost and the rearmost devices.

In a particularly preferred embodiment of the invention, the foremost device comprises a baler and the rearmost device comprises a trailing bale wrapper apparatus. The combination therefore can be towed behind e.g. a tractor, in order to pick-up already mown grass, and the baler forms the grass into a tightly packed bale, and which is then transferred to a table of the bale wrapper, which then carries out a bale wrapping operation, prior to discharge of the wrapped bale. Therefore, in a single pass of the combination, two separate operations can be carried out, namely picking-up and forming a bale, and subsequent wrapping of the bale.

The baler may be of any suitable type, including a baler for forming bales of rectangular cross section, or cylindrical bales of circular cross section. The bale wrapper can be of the rotating turntable type, or can have a fixed table, and one or more orbiting satellite dispensers of stretch film. For particularly high speed wrapping operation, a bale wrapper could be of the rotating turntable type, plus one or more orbiting satellite film dispenser reels.

The invention may be applied to other types of machines used in agriculture in combination, such as a trailed combination of a bale wrapper and a shelf-loading trailer.

The control device (which is responsive to pivotal adjustment of the axis of the frame of the foremost device) can be any suitable mechanical, electromechanical or hydraulically operated mechanism. In a preferred arrangement, the control device includes a monitoring device which detects pivotal adjustment of the axis of the frame of the foremost device from a neutral or datum position, and an actuator device may be provided which is controlled by the monitoring device and which is coupled with the steering device so as to make any necessary compensating adjustment of steering device to maintain the axis of the frame of the rearmost device substantially parallel with the axis of the frame of the foremost device.

Alternatively, the monitoring device may be arranged to monitor relative pivotal adjustment between the axis of the frame of the foremost device and the axis of the frame of the rearmost device.

The actuator may comprise a mechanical arrangement of connecting rods or the like, providing mechanical feedback to the steering device. Alternatively, the steering device could be controlled by other means, such as electric or hydraulic actuation.

Preferred embodiments of the invention will now be described in detail, by way of example only, with reference to the accompanying drawings, in which:
Figure 1 is a schematic plan view of a first embodiment of tandem towable combination according to the invention coupled to the rear of a tractor, and showing the tractor and the combination undergoing turning movement, in which the combination comprises a foremost device in the form of a baler and a rearmost device in the form of an orbiting satellite bale wrapper;
Figure 2 is an isometric view showing in more detail how the trailed combination follows the turning movement of the tractor;
Figure 3 is a further isometric view from an opposite side, also showing how the combination follows the turning movement of the tractor;
Figures 4 to 6 are similar views of a modified embodiment of the invention; and,
Figures 7 to 10 are views of a further embodiment of the invention.

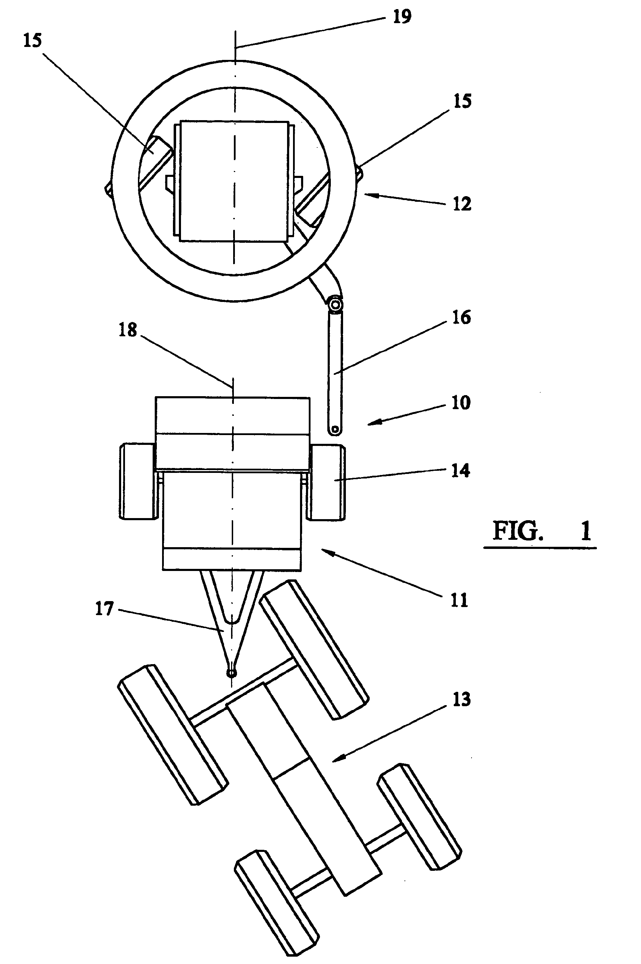

Referring now to Figures 1 to 3 of the drawings, the illustrated example of tandem towable combination to which the invention may be applied is designated generally by reference 10, and comprises a foremost device 11 which is coupled at its forward end with the rear of a propelling vehicle 13 e.g. an agricultural tractor, and with a rearmost device 12 being coupled at its forward end to the foremost device 11 to be towed behind it.

In the illustrated example, the foremost device 11 comprises a baler, and the rearmost device 12 comprises an orbiting satellite type of bale wrapper. The baler and the bale wrapper can be of any suitable type, and as will be well known to those of ordinary skill in the art, balers can be of the type suitable for forming rectangular cross section bales, or cylindrical bales of circular cross section. The bale wrappers can be of the rotating turntable type, the orbiting satellite type, or combination of rotating turntable and orbiting type.

The combination 10 comprises two devices (11 and 12) each having a wheel-supported frame, with a respective wheel set, which in the illustrated arrangements comprises a single axle set of wheels 14 for the baler 11, and a single set of steerable wheels 15 for the bale wrapper 12. The forward end of the frame of the bale wrapper 12 is coupled to the rear of the baler 11 via a towing hitch 16 which comprises a draw bar which is pivotally connected at its forward end to the frame of the baler 11. The baler 11 is pivotally coupled at its forward end with the rear of the tractor 13 via towing hitch 17.

The combination 10 can be towed directly behind the tractor 13 during operation, and may be used therefore to carry out three separate operations on a crop already lying on the ground e.g. mown grass, or straw. The combination can pick up the crop lying on the ground, transfer it to the baler 11 and form it into a bale of suitable cross section, and then transfer the formed bale (by any suitable means not shown) to the bale wrapper 12, which then applies stretch film wrapping to the bale prior to discharge of the wrapped bale. The bale may be discharged by the baler 11 onto the ground, to be directly in the path of travel of the bale wrapper 12, and which may be provided with any suitable pick-up mechanism to transfer the bale onto the usual bale wrapping table of the bale wrapper 12. Alternatively, some suitable transfer mechanism could be provided in order to transfer the bale directly from the bale forming chamber of the baler 11 to the table of the bale wrapper.

However, during movement across a field with a crop lying on the ground, turning manoeuvres of the tractor and the combination will be necessary from time to time, and the control mechanism which will now be described is constructed and operated to have the function of making compensating adjustment of the steering angle of the steerable wheels 15 so as to maintain the axis of the frame of the bale wrapper 12 generally parallel with the axis of the frame of the baler 11, despite the application of turning manoeuvres to the combination by the tractor 13.

Thus, the baler 11 can follow the turning movements of the tractor 13, as shown in Figure 1, generally in the manner of any trailed vehicle. However, although there is a pivot coupling between the frame of the bale wrapper 12 and the baler 10, which permits limited pivoting movement, in practice the baler 11 and bale wrapper 12 form a composite unit, with a common longitudinal axis i.e. the unit effectively comprises a rigid-coupled assembly.

This is achieved, as can be seen in Figure 1, by automatic feedback adjustment of the steering angle of the wheels 15, so as to maintain the longitudinal axis of the bale wrapper 12 generally parallel (or coincident in some circumstances) with the longitudinal axis of the baler 11.

A control device is therefore provided (not shown) which is arranged to respond to pivotal adjustment of the axis 18 of baler 11 relative to that tractor axis, and which is coupled with a steering device (not shown) controlling the steering angle of the steerable wheels 15, in order to maintain the axis 19 of the frame of bale wrapper 12 generally parallel with the axis 18 of the baler 11.

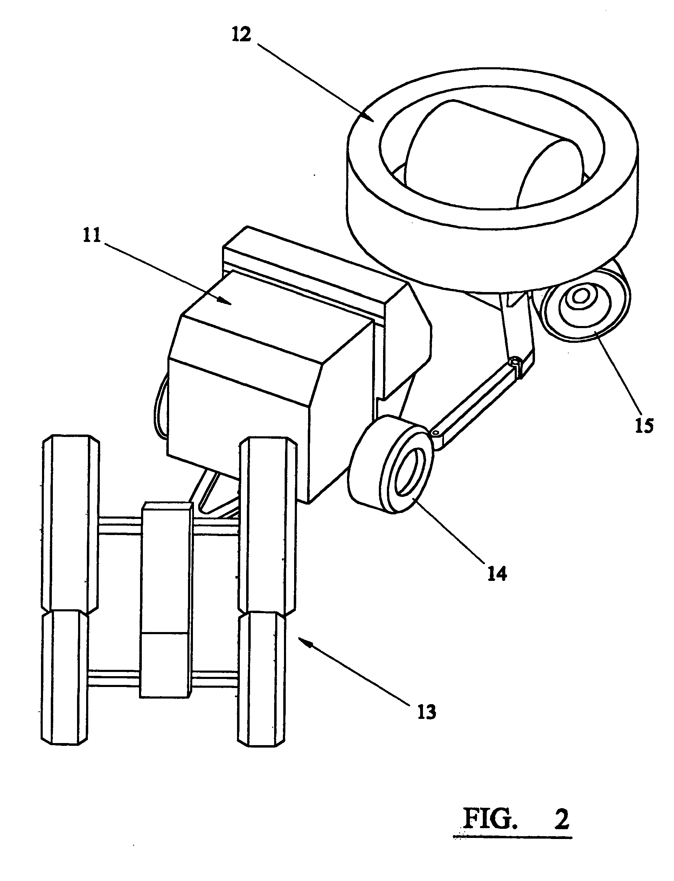

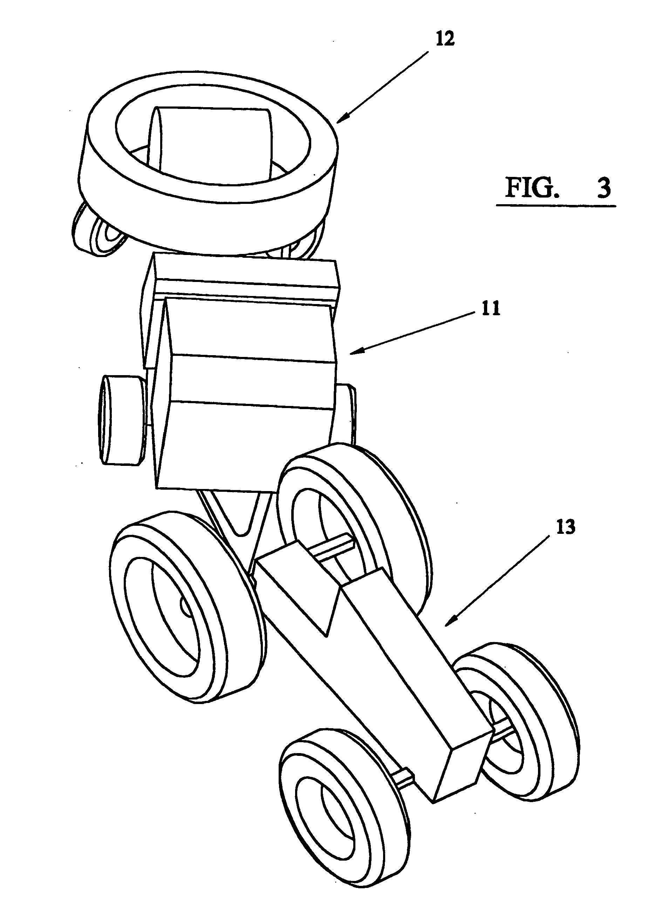

The control device may include any suitable form of monitoring device, which monitors angular adjustment of the axis 18 relative to the tractor 13 during turning manoeuvres, and which can then trigger operation of a suitable actuator device (not shown) which is coupled with the steering device and which causes suitable compensating adjustment of the steering angle of the wheels 15 to maintain the axes 18 and 19 generally parallel. Figures 2 and 3 are isometric views, showing how this is achieved, whereby the combination 10 of wheeled devices 11 and 12 effectively form a unitary assembly which turn together about the pivot connection of the forward hitch 17 to the rear of the tractor 13.

The actuator to operate the steering device can take any suitable form, including mechanical rod linkage, electric actuation or hydraulic actuation.

The invention can be applied to other types of towable combination, e.g. a bale wrapper followed by a self loading trailer.

However, while the preferred arrangement of the control device is such that it can monitor deviation between the axis of the propelling vehicle and the axis 18 of the foremost device 11, it should be understood that it is within the scope of the invention for other arrangements of control device to be provided. Thus, the control device could be arranged at any convenient position in order to minor deviation between the axis 18 of the foremost device 11 and the axis 19 of the rearmost device 12, and then to provide a feedback signal which applies necessary adjustment to the steering angle set by the steerable wheelset 15 of the rearmost device 12, in order to maintain a generally parallel relationship between the axes 18 and 19, during turning movements of the combination 10 by the propelling vehicle (tractor) 13.

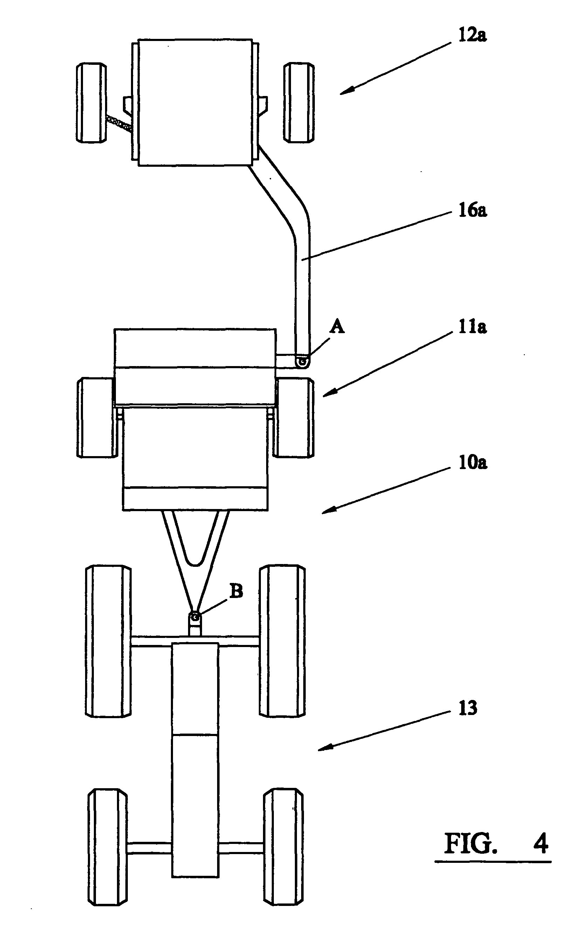

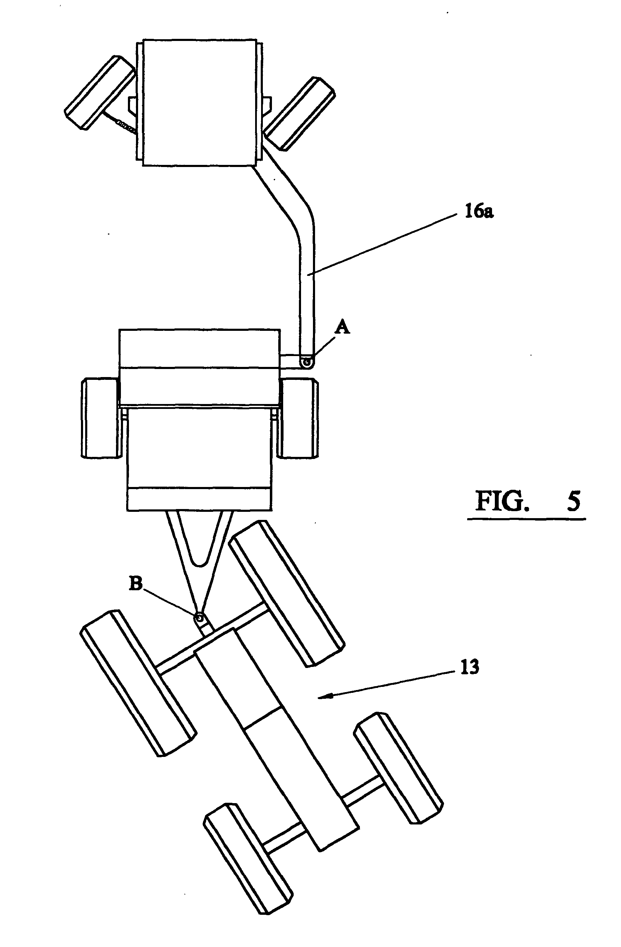

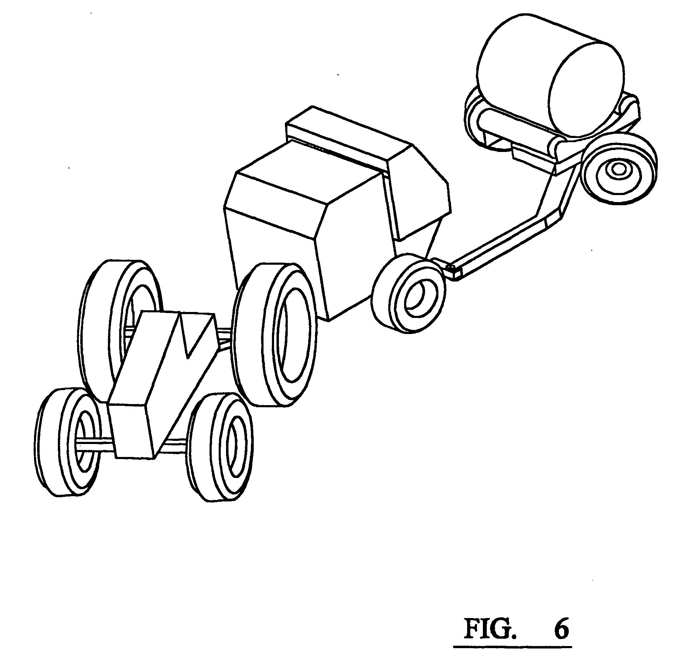

A modified embodiment of the invention is shown in Figures 4 to 6, and which is generally similar to the first described embodiment. The towed combination is designated generally by reference 10a, and foremost device 11a is coupled to the rear of the tractor 13 via forward pivot hitch B, and rearmost device 12a is coupled to the rear of foremost device 11a via rigid cranked towbar 16a and forward pivot hitch A.

Figure 4 to 6 show the compensating adjustment of the steerable wheels of the rearmost device 12a, during turning of the combination 10a by the tractor 13, in order to maintain the axes of the foremost and rearmost devices generally parallel.

A control device is provided in order to monitor deviation between the axis of the tractor 13 and the foremost device 11a, to provide compensating adjustment of the steering mechanism of the rearmost device 12a. Alternatively, the control device can monitor any deviation between the axes of the foremost and rearmost devices, in order to provide suitable compensating feedback signals to an actuator which operates the steering mechanism.

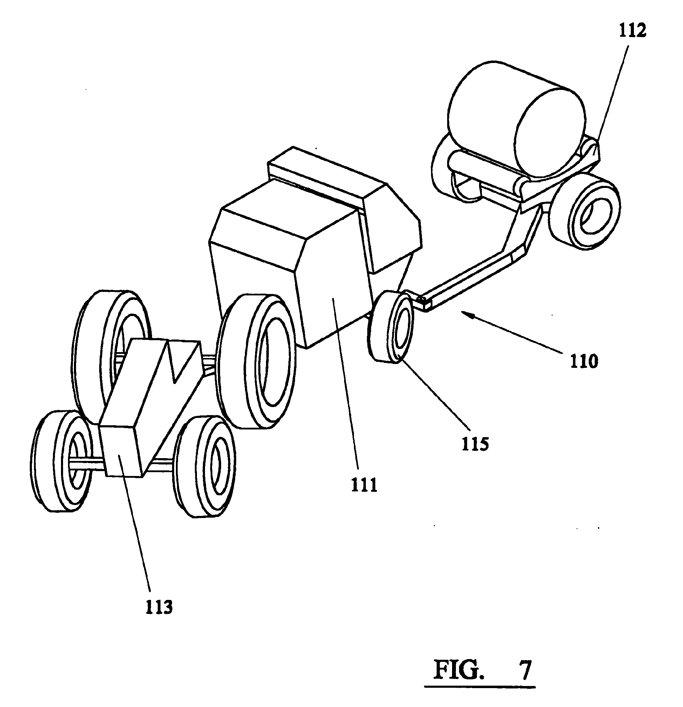

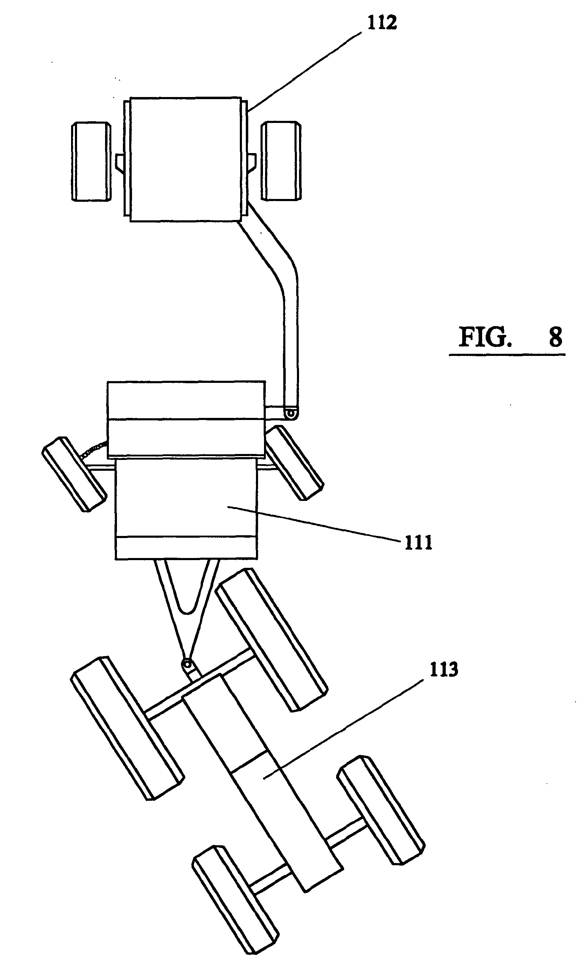

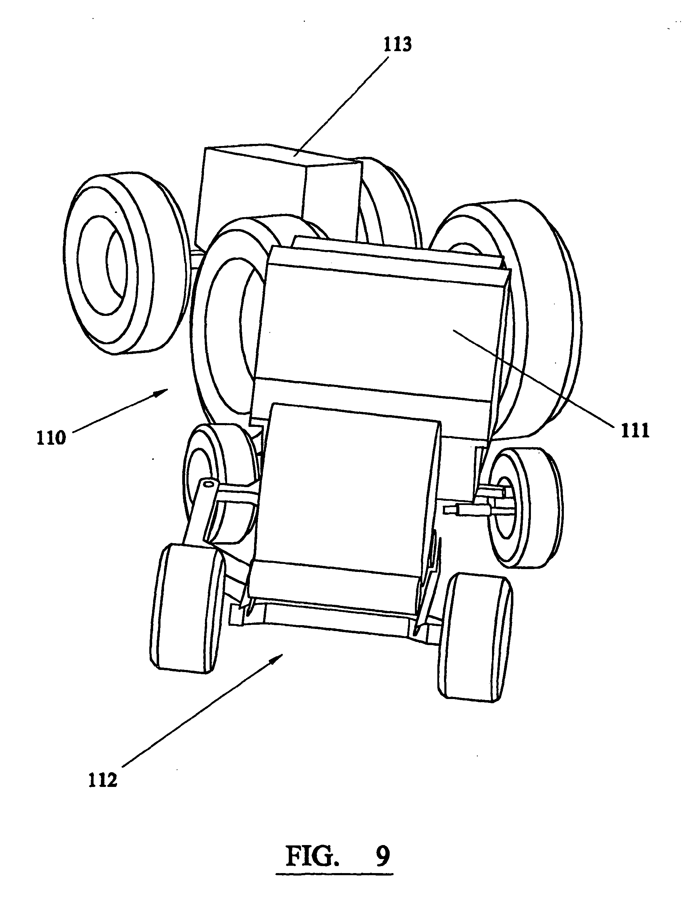

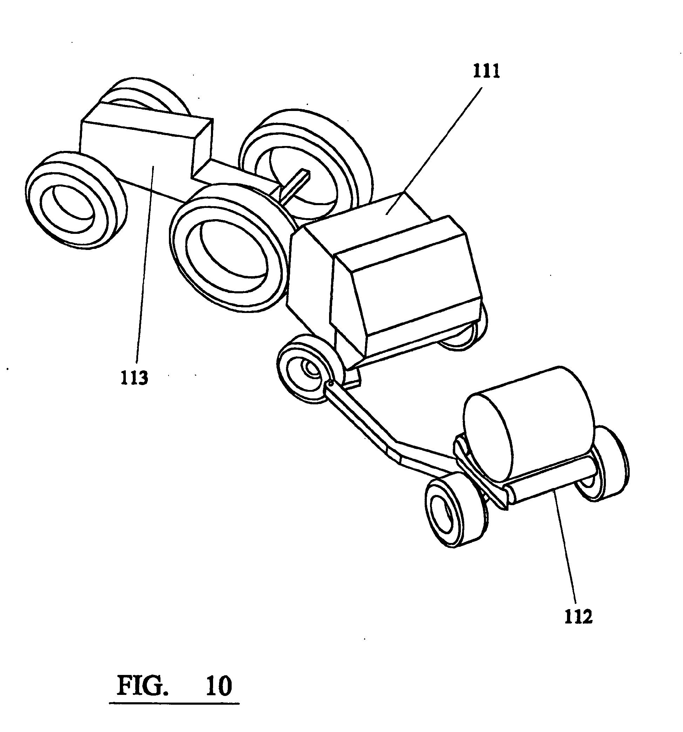

Referring now to Figures 7 to 10, this shows a further embodiment of the invention, designated generally by reference 110, and which comprises propelling vehicle 113, foremost wheeled device 111 and rearmost wheeled device 112, which in the illustrated embodiment comprise a baler and a bale wrapper. However, in this embodiment, although devices 111 and 112 each comprise again frames supported by a wheelset, in which embodiment the wheelset 115 of the foremost device 111 (the baler) are steerable wheels, whereas the wheels of the rearmost device 112 (the bale wrapper) have a fixed axle.

By provision of suitable monitoring devices (to monitor deviation of the axis from a predetermined datum), plus feedback control to a steering mechanism, the combination 110 can be caused to move along any required path, as set by a pre-programmed controller (not shown), depending upon the required mode of operation.

As described earlier, one of the modes of controlled adjustment is such that the control device makes compensating adjustment of the steering mechanism in order to maintain the axis 19 of the frame of the rearmost device 12 substantially parallel with the axis 18 of the frame of the foremost device 11 during forward turning movement of the combination by the propelling vehicle 13.

A second mode of controlled adjustment which may be set on the programmed controller is such that the control device makes compensating adjustment of the steering mechanism in order to control reverse steering movement of the combination.

A third mode of controlled adjustment is such that the control device makes compensating adjustment of the steering mechanism in order that, during turning movement of the combination, the wheels of the rearmost device 12, 112 substantially follow the path of the wheels of the foremost device 11, 111, to enable tighter turns to be negotiated e.g. when leaving a field entrance onto the public highway.

In preferred embodiments of the invention, the steering mechanism comprises any suitable linkage controlling the steering angle of adjustable steering wheels of the wheelset of one of the vehicles. However, other arrangements of steering mechanism may be provided e.g. provision of one or more separate steerable wheels. A further alternative is to provide a drawbar type of steering mechanism, in which the forward end of the drawbar is transversely adjustable to exert a steering action.

There have been referred to above three possible modes of operation of the towed tandem combination which can be achieved, and a detailed table of adjustments and control parameters is set out below, by way of example only, in the preferred application of the invention to a towed combination of a baler and a bale wrapper. These parameters are set out by way of example only, and are not intended to be limiting to the claimed protection.

Different possible steering systems for wrapper baler combinations.

### Definitions:

K - constant, different size in defined actions
A - angle between tractor and baler
B - angle between baler and wrapper
C - angle of wrapper wheels
D - angle of baler wheels

| Wheels steering | | Actions | | |
|---|---|---|---|---|
| | Monitoring | Inline | Track following | Backwards |
| Steering on wrapper-wheels | Between tractor and baler + wrapper wheel angle | C=K*A | C=K*A | C=K*A |
| | Between baler and wrapper + wrapper wheel angle | B minimized by changing C | C=K*B | C=K*B |
| | Between baler and wrapper only | B minimized by chancing C | | B minimized by changing C opposite direction of inline |
| Steering on baler-wheels | Between tractor and baler + baler wheel angle | D=K*A | D=K*A | D=K*A |
| | Between baler and wrapper + baler wheel angle | B minimized by changing D | D=K*A | D=K*A |
| | Between baler and wrapper only | B minimized by changing D | | B minimized by changing D opposite direction of line |

## Claims

1. A tandem towable combination (10, 110) of a foremost wheeled device (11, 111) and a rearmost wheeled device (12, 112), the foremost device (11, 111) being intended to be towed behind a propelling vehicle (13, 113) and the rearmost device (12, 112) being intended to be towed behind the foremost device (11, 111), and each device (11, 12) having a wheel-supported frame with a generally longitudinally extending axis (18, 19), and in which the combination comprises:
a first forward towing hitch (17) for coupling the frame of the foremost device (11) to the rear of the propelling vehicle (13), and a second towing hitch (16) for coupling the frame of the rearmost device (12) pivotally to the rear of the foremost device (11);
a control device which is responsive to pivotal adjustment of the axis (18, 19) of one of said devices (11, 12) during movement of the combination; and
a steering mechanism on one of said devices (11, 12) and which is operative, under control of the control device, to adjust the inclination of the axis of said one device;
**characterised in that** the first forward towing hitch (17) is operative to couple the frame of the foremost device (11) pivotally to the rear of the propelling vehicle (13) so that the axis (18) of the frame can adjust its inclination relative to the travelling direction of the propelling vehicle during turning movement of the propelling vehicle (13) and the combination (10, 110), and **in that** the control device is responsive to pivotal adjustment of the axis (18, 19) of said one device (11, 12) (a) relative to the propelling vehicle or (b) relative to the other of said device (11, 12) during steering movement of the combination and so as to make compensating adjustment of the steering mechanism, as a consequence of adjustment of the axis of said one device, in order to maintain the axis (19) of the frame of the rearmost device (12) substantially parallel with the axis (18) of the frame (12) of the foremost device (11) during forward turning movement of the combination and the propelling vehicle.

2. A combination according to claim 1, **characterised in that** the steering mechanism is provided on the rearmost device (12).

3. A combination according to claim 1, **characterised in that** the steering mechanism is provided on the foremost device (111).

4. A combination according to any one of claims 1 to 3, **characterised in that** the steering mechanism is coupled with a wheelset (15) supporting the respective device (11, 12).

5. A combination according to any one of the preceding claims, **characterised by** an electronic controller which is pre-programmed with more than one mode of controlled adjustment of the path of travel of the combination.

6. A combination according to claim 5, **characterised in that** one of the modes of controlled adjustment is such that the control device makes compensating adjustment of the steering mechanism in order to control reverse steering movement of the combination.

7. A combination according to claim 5, **characterised in that** one of the modes of controlled adjustment is such that the control device makes compensating adjustment of the steering mechanism in order that, during turning movement of the combination, the wheels of the rearmost device (12) substantially follow the path of the wheels of the foremost device (11), to enable tighter turns to be negotiated.

8. A combination according to any one of claims 1 to 3, **characterised in that** the steering mechanism comprises a drawbar type steering mechanism in which the forward end of the drawbar is transversely adjustable to exert a steering action.

9. A combination according to any one of the preceding claims, **characterised in that** the foremost device (11) comprises a baler and the rearmost device (12) comprises a bale wrapper.

10. A combination according to claim 9, **characterised in that** the baler is of the type suitable for forming bales of (a) rectangular cross section or (b) of circular cross section.

11. A combination according to claim 9 or 10, **characterised in that** the bale wrapper is of the rotating turntable type; orbiting satellite type; or a combination of rotating turntable and orbiting satellite type.

12. A combination according to any one of claims 9 to 11, **characterised in that** the control device includes a monitoring device operative to monitor pivotal adjustment of the axis (18) of the frame of the foremost device (11) from a datum or neutral position relative to the propelling vehicle (13).

13. A combination according to any one of claims 9 to 12, **characterised in that** the control device includes a monitoring device operative to monitor relative pivotal adjustment between the axis (18) of the frame of the foremost device (11) and the axis (19) of the frame of the rearmost device (12).

14. A combination according to any one of claims 12 or 13, **characterised in that** the control device includes an actuator device controllable by the monitoring device.

15. A combination according to claim 14, **characterised in that** the actuator is operative to control the steering angle of the steerable wheels (15) of the rearmost device (12) via a mechanical linkage, an electric actuator or a hydraulic actuator.

16. A combination according to claim 1, **characterised in that** the foremost device (11) comprises a bale wrapper and the rearmost device (12) comprising a self-loading trailer.

17. A combination (10, 110) according to claim 1, in which a a steering device is coupled with the wheelset (15) of the rearmost device (12), and the control device is coupled with the steering device and is operative to adjust the steering angle of the wheelset (15) during forward turning movement of the propelling vehicle and the combination:
**characterised in that** the control device is operative to make compensating adjustment of the steering device, as a consequence of adjustment of the axis (18) of the frame of the foremost device (11), in order to maintain the axis (19) of the frame of the rearmost device (12) substantially parallel with the axis of the frame of the foremost device during forward turning movement of the combination and the propelling vehicle.

18. A tandem towable combination (10, 110) according to claim 1, **characterised in that** the control device includes an electronic controller which is pre-programmed with more than one mode of controlled adjustment of the path of travel of the combination, with one of such modes being such that the control device can make compensating adjustment of the steering mechanism in order to control reverse steering movement of the combination.

## Patentansprüche

1. Hintereinander ziehbare Kombination (10, 110) einer vordersten Vorrichtung (11,111) mit Rädern und einer hintersten Vorrichtung (12, 112) mit Rädern, wobei die vorderste Vorrichtung (11,111) dazu bestimmt ist, hinter einem Zugfahrzeug (13, 113) gezogen zu werden, und die hinterste Vorrichtung (12, 112) dazu bestimmt ist, hinter der vordersten Vorrichtung (11, 111) gezogen zu werden, wobei jede Vorrichtung (11,12) einen mittels Reifen getragenen Rahmen mit einer sich im Allgemeinen in Längsrichtung erstreckenden Achse (18,19) aufweist, und wobei die Kombination umfasst:
eine erste vorwärts ziehende Kupplung (17), um den Rahmen der vordersten Vorrichtung (11) mit der Rückseite des Zugfahrzeugs (13) zu koppeln, und eine zweite ziehende Kupplung (16), um den Rahmen der hintersten Vorrichtung (12) schwenkend mit der Rückseite der vordersten Vorrichtung (11) zu koppeln;
eine Steuervorrichtung, welche auf eine Kippstellung der Achse (18, 19) von einer der Vorrichtungen (11,12) während einer Bewegung der Kombination reagiert; und
einen Lenkmechanismus auf einer der Vorrichtungen (11,12), welcher funktionsfähig ist, unter einer Steuerung der Steuervorrichtung die Neigung der Achse der einen Vorrichtung einzustellen;
**dadurch gekennzeichnet, dass** die erste vorwärts ziehende Kupplung (17) funktionsfähig ist, um den Rahmen der vordersten Vorrichtung (11) schwenkend mit der Rückseite des Zugfahrzeugs (13) zu koppeln, so dass die Achse (18) des Rahmens ihre Neigung relativ zu der Bewegungsrichtung des Zugfahrzeugs während einer Wendebewegung des Zugfahrzeugs (13) und der Kombination (10,110) einstellen kann, und dass die Steuervorrichtung auf eine Kippstellung der Achse (18, 19) der einen Vorrichtung (11,12) (a) relativ zu dem Zugfahrzeug oder (b) relativ zu der anderen Vorrichtung (11,12) während einer Lenkbewegung der Kombination reagiert und so eine kompensierende Einstellung des Lenkmechanismus als eine Folge der Einstellung der Achse der einen Vorrichtung vornimmt, um die Achse (19) des Rahmens der hintersten Vorrichtung (12) im Wesentlichen parallel mit der Achse (18) des Rahmens (12) der vordersten Vorrichtung (11) während einer vorwärts gerichteten Wendebewegung der Kombination und des Zugfahrzeugs zu halten.

2. Kombination nach Anspruch 1, **dadurch gekennzeichnet, dass** der Lenkmechanismus auf der hintersten Vorrichtung (12) vorhanden ist.

3. Kombination nach Anspruch 1, **dadurch gekennzeichnet, dass** der Lenkmechanismus auf der vordersten Vorrichtung (111) vorhanden ist.

4. Kombination nach einem der Ansprüche 1 bis 3, **dadurch gekennzeichnet, dass** der Lenkmechanismus mit einem Radsatz (15), welcher die entsprechende Vorrichtung (11, 12) trägt, gekoppelt ist.

5. Kombination nach einem der vorhergehenden Ansprüche, **gekennzeichnet durch** eine elektronische Steuerung, welche mit mehr als einer Betriebsart einer gesteuerten Einstellung des Bewegungspfades der Kombination vorprogrammiert ist.

6. Kombination nach Anspruch 5, **dadurch gekennzeichnet, dass** eine der Betriebsarten der gesteuerten Einstellung derart ist, dass die Steuervorrichtung eine kompensierende Einstellung des Lenkmechanismus vornimmt, um eine Rückwärtslenkbewegung der Kombination zu steuern.

7. Kombination nach Anspruch 5, **dadurch gekennzeichnet, dass** eine der Betriebsarten der gesteuerten Einstellung derart ist, dass die Steuervorrichtung eine kompensierende Einstellung des Lenkmechanismus vornimmt, damit während einer Wendebewegung der Kombination die Räder der hintersten Vorrichtung (12) im Wesentlichen der Bahn der Räder der vordersten Vorrichtung (11) folgen, um engere Kurven zu ermöglichen, welche vorzugeben sind.

8. Kombination nach einem der Ansprüche 1 bis 3, **dadurch gekennzeichnet, dass** der Lenkmechanismus einen deichselartigen Lenkmechanismus umfasst, bei welchem das vordere Ende der Deichsel quer einstellbar ist, um einen Lenkvorgang auszuüben.

9. Kombination nach einem der vorhergehenden Ansprüche, **dadurch gekennzeichnet, dass** die vorderste Vorrichtung (11) eine Ballenpresse und die hinterste Vorrichtung (12) eine Ballenwickelvorrichtung umfasst.

10. Kombination nach Anspruch 9, **dadurch gekennzeichnet, dass** die Ballenpresse von dem Typ ist, welcher geeignet ist, um Ballen von (a) einem rechteckigen Querschnitt oder (b) einem kreisförmigen Querschnitt auszubilden.

11. Kombination nach Anspruch 9 oder 10, **dadurch gekennzeichnet, dass** die Ballenwickelvorrichtung von dem sich drehenden Drehtischtyp, von dem kreisenden Satellitentyp oder eine Kombination von dem sich drehenden Drehtischtyp und dem kreisenden Satellitentyp ist.

12. Kombination nach einem der Ansprüche 9 bis 11, **dadurch gekennzeichnet, dass** die Steuervorrichtung eine Kontrollvorrichtung aufweist, welche funktionsfähig ist, um eine Kippstellung der Achse (18) des Rahmens der vordersten Vorrichtung (11) von einer Bezugsposition oder neutralen Position relativ zu dem Zugfahrzeug (13) zu kontrollieren .

13. Kombination nach einem der Ansprüche 9 bis 12, **dadurch gekennzeichnet, dass** die Steuervorrichtung eine Kontrollvorrichtung aufweist, welche funktionsfähig ist, um eine relative Kippstellung zwischen der Achse (18) des Rahmens der vordersten Vorrichtung (11) und der Achse (19) des Rahmens der hintersten Vorrichtung (12) zu kontrollieren.

14. Kombination nach einem der Ansprüche 12 oder 13, **dadurch gekennzeichnet, dass** die Steuervorrichtung eine Betätigungsvorrichtung aufweist, welche durch die Kontrollvorrichtung steuerbar ist.

15. Kombination nach Anspruch 14, **dadurch gekennzeichnet, dass** die Betätigungsvorrichtung funktionsfähig ist, um den Lenkwinkel der lenkbaren Räder (15) der hintersten Vorrichtung (12) über eine mechanische Verbindung, eine elektrische Betätigungsvorrichtung oder eine hydraulische Betätigungsvorrichtung zu steuern.

16. Kombination nach Anspruch 1, **dadurch gekennzeichnet, dass** die vorderste Vorrichtung (11) eine Ballenwickelvorrichtung und die hinterste Vorrichtung (12) einen sich selbst beladenden Anhänger umfasst.

17. Kombination (10,110) nach Anspruch 1, bei welcher eine Lenkvorrichtung mit einem Radsatz (15) der hintersten Vorrichtung (12) gekoppelt ist, und die Steuervorrichtung mit der Lenkvorrichtung gekoppelt ist und funktionsfähig ist, um den Lenkwinkel des Radsatzes (15) während einer vorwärts gerichteten Wendebewegung des Zugfahrzeugs und der Kombination einzustellen:
**dadurch gekennzeichnet, dass** die Steuervorrichtung funktionsfähig ist, um eine kompensierende Einstellung der Lenkvorrichtung als eine Folge einer Einstellung der Achse (18) des Rahmens der vordersten Vorrichtung (11) vorzunehmen, um die Achse (19) des Rahmens der hintersten Vorrichtung (12) im Wesentlichen parallel mit der Achse des Rahmens der vordersten Vorrichtung während einer vorwärts gerichteten Wendebewegung der Kombination und des Zugfahrzeugs zu halten.

18. Hintereinander ziehbare Kombination (10, 110) nach Anspruch 1, **dadurch gekennzeichnet, dass** die Steuervorrichtung eine elektronische Steuerung aufweist, welche mit mehr als einer Betriebsart einer gesteuerten Einstellung der Bewegungsbahn der Kombination vorprogrammiert ist, wobei eine dieser Betriebsarten derart ist, dass die Steuervorrichtung eine kompensierende Einstellung des Lenkmechanismus vornehmen kann, um eine Rückwärtslenkbewegung der Kombination zu steuern.

## Revendications

1. Ensemble de remorquage en tandem (10, 110) d'un dispositif à roues situé le plus en avant (11, 111) et un dispositif à roues situé le plus en arrière (12, 112), le dispositif situé le plus en avant (11, 111) étant prévu pour être remorqué derrière un véhicule de propulsion (1 3, 113) et le dispositif situé le plus en arrière (12, 112) étant prévu pour être remorqué derrière le dispositif situé le plus en avant (11, 111), et chaque dispositif (11, 12) ayant un châssis supporté par des roues avec un axe (18, 19) s'étendant généralement longitudinalement, et dans lequel l'ensemble comprend :
un premier attelage de remorquage avant (17) pour coupler le châssis du dispositif situé le plus en avant (11) à l'arrière du véhicule de propulsion (13) et un second attelage de remorquage (1 6) pour coupler le châssis du dispositif situé le plus en arrière (12) de manière pivotante à l'arrière du dispositif situé le plus en avant (11) ;
un dispositif de commande qui est sensible à l'ajustement pivotant de l'axe (18, 19) de l'un desdits dispositifs (11, 12) pendant le mouvement de l'ensemble ; et
un mécanisme de direction sur l'un desdits dispositifs (11, 12) et qui est opérationnel sous la commande du dispositif de commande, pour ajuster l'inclinaison de l'axe dudit un dispositif ;
**caractérisé en ce que** le premier attelage de remorquage avant (17) est opérationnel pour coupler le châssis du dispositif situé le plus en avant (11) de manière pivotante à l'arrière du véhicule de propulsion (13) de sorte que l'axe (18) du châssis peut régler son inclinaison par rapport à la direction de déplacement du véhicule de propulsion pendant le mouvement de rotation du véhicule de propulsion (13) et de l'ensemble (10, 110), et **en ce que** le dispositif de commande est sensible à l'ajustement pivotant de l'axe (18, 19) dudit un dispositif (11, 12) (a) par rapport au véhicule de propulsion ou bien (b) par rapport à l'autre dudit dispositif (11, 12) pendant le mouvement de direction de l'ensemble et afin de compenser l'ajustement du mécanisme de direction, suite à l'ajustement de l'axe dudit un dispositif, afin de maintenir l'axe (19) du châssis du dispositif situé le plus en arrière (12) sensiblement parallèle à l'axe (18) du châssis (1 2) du dispositif situé le plus en avant (11) pendant le mouvement de rotation avant de l'ensemble et du véhicule de propulsion.

2. Ensemble selon la revendication 1, **caractérisé en ce que** le mécanisme de direction est prévu sur le dispositif situé le plus en arrière (12).

3. Ensemble selon la revendication 1, **caractérisé en ce que** le mécanisme de direction est prévu sur le dispositif situé le plus en avant (111).

4. Ensemble selon l'une quelconque des revendications 1 à 3, **caractérisé en ce que** le mécanisme de direction est couplé avec un ensemble de roues (15) supportant le dispositif (11, 12) respectif.

5. Ensemble selon l'une quelconque des revendications précédentes, **caractérisé par** un contrôleur électronique qui est préprogrammé avec plus d'un mode d'ajustement contrôlé de la trajectoire de déplacement de l'ensemble.

6. Ensemble selon la revendication 5 **caractérisé en ce que** l'un des modes de l'ajustement contrôla est tel que le dispositif de commande compense l'ajustement du mécanisme de direction afin de contrôler le mouvement de direction en marche arrière de l'ensemble.

7. Ensemble selon la revendication 5, **caractérisé en ce que** l'un des modes d'ajustement contrôlé est tel que le dispositif de commande compense l'ajustement du mécanisme de direction de sorte que pendant le mouvement de rotation de l'ensemble, les roues du dispositif situé le plus en arrière (12) suivent sensiblement la trajectoire des roues du dispositif situé le plus en avant (11), afin de prendre des virages plus serrés.

8. Ensemble selon l'une quelconque des revendications 1 à 3, **caractérisé en ce que** le mécanisme de direction comprend un mécanisme de direction de type à barre de remorquage dans lequel l'extrémité avant de la barre de remorquage peut être réglée de manière transversale pour exercer une action de direction.

9. Ensemble selon l'une quelconque des revendications précédentes, **caractérisé en ce que** le dispositif situé le plus en avant (11) comprend une ramasseuse-presse et le dispositif situé le plus en arrière (12) comprend une enrubanneuse.

10. Ensemble selon la revendication 9, **caractérisé en ce que** la ramasseuse-presse est du type approprié pour former des balles de (a) section transversale rectangulaire ou (b) section transversale circulaire.

11. Ensemble selon la revendication 9 ou 10, **caractérisé en ce que** l'enrubanneuse est du type à plateau tournant ; du type à satellite, ou un ensemble composé du plateau tournant et du type à satellite.

12. Ensemble selon l'une quelconque des revendications 9 à 11, **caractérisé en ce que** le dispositif de commande comprend un système de surveillance pouvant fonctionner pour surveiller le réglage pivotant de l'axe (18) du châssis du dispositif situé le plus en avant (11) à partir d'une position donnée ou neutre par rapport au véhicule de propulsion (13).

13. Ensemble selon l'une quelconque des revendications 9 à 12, **caractérisé en ce que** le dispositif de commande comprend un dispositif de surveillance opérationnel pour surveiller le réglage pivotant relatif entre l'axe (18) du châssis du dispositif situé le plus en avant (11) et l'axe (19) du châssis du dispositif situé le plus en arrière (1 2.)

14. Ensemble selon l'une quelconque des revendications 12 ou 13, **caractérisé en ce que** le dispositif de commande comprend un dispositif actionneur pouvant être commandé par le dispositif de surveillance.

15. Ensemble selon la revendication 14, **caractérisé en ce que** l'actionneur est opérationnel pour commander l'angle de direction des roues motrices (15) du dispositif situé le plus en arrière (1 2) via une tringlerie mécanique, un actionneur électrique ou un actionneur hydraulique.

16. Ensemble selon la revendication 1 , **caractérisé en ce que** le dispositif situé le plus en avant (11) comprend une enrubanneuse et le dispositif situé le plus en arrière (12) comprenant une remorque auto-chargeuse.

17. Ensemble (10, 110) selon la revendication 1, dans lequel un dispositif de direction est couplé à l'ensemble de roues (15) du dispositif situé le plus en arrière (12) et le dispositif de commande est couplé avec le dispositif de direction et est opérationnel pour ajuster l'angle de direction de l'ensemble de roues (15) pendant le mouvement de rotation vers l'avant du véhicule de propulsion et de l'ensemble :
**caractérisé en ce que** le dispositif de commande est opérationnel pour compenser l'ajustement du dispositif de direction, suite à l'ajustement de l'axe (18) du châssis du dispositif situé le plus en avant (11), afin de maintenir l'axe (19) du châssis du dispositif situé le plus en arrière (12) sensiblement parallèle à l'axe du châssis du dispositif situé le plus en avant pendant le mouvement de rotation vers l'avant de l'ensemble et du véhicule de propulsion.

18. Ensemble de remorquage en tandem (10, 110) selon la revendication 1, **caractérisé en ce que** le dispositif de commande comprend un contrôleur électronique qui est préprogrammé avec plus d'un mode d'ajustement contrôlé de la trajectoire de déplacement de l'ensemble, dont l'un de ces modes est tel que le dispositif de commande peut compenser l'ajustement du mécanisme de direction afin de contrôler le mouvement de direction de marche arrière de l'ensemble.
